# EUROPÄISCHE PATENTANMELDUNG

Europäisches Patentamt
European Patent Office
Office européen des brevets

Veröffentlichungsnummer: **0 290 974**
**A1**

Anmeldenummer: 88107307.6

Anmeldetag: 06.05.88

Int. Cl.⁴: **C22B 7/00 , C22B 9/22 , C10B 53/00 , A62D 3/00**

Priorität: 14.05.87 DE 3716231

Veröffentlichungstag der Anmeldung:
17.11.88 Patentblatt 88/46

Benannte Vertragsstaaten:
AT BE CH ES FR GB GR IT LI LU NL SE

Anmelder: **Fried. Krupp Gesellschaft mit beschränkter Haftung**
**Altendorfer Strasse 103**
**D-4300 Essen 1(DE)**

Erfinder: **Dörr, Hermann, Dipl.-Ing.**
**Theodor-Suhnelstrasse 6**
**D-4330 Mülheim(DE)**
Erfinder: **Rossner, Heinrich-Otto, Dipl.-Ing.**
**Pettenkoferstrasse 18**
**D-4300 Essen 1(DE)**
Erfinder: **Coenen, Hubert, Dr. Ing.**
**Wortbergrode 13**
**D-4300 Essen 1(DE)**
Erfinder: **Berger, Dirk**
**Jägerwinkel 30**
**D-2303 Gettorf(DE)**

**Thermische Aufarbeitung von schüttfähigen Feststoffen mit Schwermetallverbindungen und/oder toxischen Kohlenwasserstoffen.**

Es wird ein Verfahren zur thermischen Aufarbeitung von schüttfähigen Feststoffen mit Schwermetallverbindungen und/oder toxischen Kohlenwasserstoffverbindungen beschrieben, bei dem die Feststoffe in einem geschlossenen Raum geschmolzen werden und die Schmelze abgezogen wird. Die gasförmigen Reaktions-und Verdampfungsprodukte werden aus dem Raum abgezogen, ihre kondensierbaren Anteile in einer Kühlstrecke niedergeschlagen und ihre nichtkondensierbaren Anteile einer geeigneten Gasbehandlung zugeführt.

EP 0 290 974 A1

# Thermische Aufarbeitung von schüttfähigen Feststoffen mit Schwermetallverbindungen und/oder toxischen Kohlenwasserstoffen

In Abfallverbrennungs-und verwertungsanlagen, wie z.B. Hausmüllverbrennungsanlagen, Kabelverschwelanlagen und auch Aluminiumschmelzwerke, fallen Filter-bzw. Flugaschen an, die neben Schwermetallen z.B. auch polychlorierte Dibenzodioxine und polychlorierte Dibenzofurane (Kurzbezeichnung Dioxine) enthalten können. Die Ablagerung derartiger Filteraschen auf Deponen ist wegen der Auslaugbarkeit der Schwermetalle, z.B. des Cadmiums, des Chroms und des Quecksilbers, sehr problematisch und führt auch wegen ihres möglichen Dioxin-und Furangehaltes zu Umweltgefährdungen.

Ebenfalls recht problematisch ist der Umgang mit Böden, die in ähnlicher Weise verunreinigt sind.

Eine Teillösung des Deponierungsproblems wurde von Hagenmaier (337. Dechema-Kolloqium vom 2. April 1987) vorgeschlagen. Durch eine Wärmebehandlung der Filterasche im Temperaturbereich 300 bis 400 °C gelingt es unter reduzierenden Bedingungen - aufgrund der katalytischen Eigenschaften der Filteraschen - die darin enthaltenen Dioxine nahezu quantitativ zu zerstören. Nachteilig an diesem Verfahren ist, daß die Schwermetalle fast unverändert in der Filterasche vorhanden bleiben und dadurch die Deponierfähigkeit des entstandenen Produktes weiterhin stark eingeschränkt bleibt.

Eine umfassende Lösung wurde von Vogg (337. Dechema-Kolloqium vom 2. April 1987) vorgestellt. Durch eine saure Laugung wird die Filterasche von ihren löslichen Schwermetallteilchen befreit. Die ausgelaugte Filterasche wird der Müllfeuerung aufgegeben. Durch Einbringung in den Hochtemperaturbereich der Feuerung soll für eine gute Einbindung der gelaugten Filterasche in die Schlacke und gleichzeitig für eine wirkungsvolle Zerstörung der organisch-toxischen Substanzen gesorgt werden. Das Verhalten der Filterasche im geschlossenen Verfahrenskreis ist derzeit quantitativ und qualitativ nicht bekannt. Es muß erwartet werden, daß die Wirksamkeit der Dioxinzerstörung durch die auf dem Verbrennungsrost immer vorhandenen Temperatur-und Materialhomogenitäten stark schwankt. Zudem muß befürchtet werden, daß der Filteraschekreislauf sich mengenmäßig aufschaukelt, wodurch der Aufwand für die Laugung proportional steigt.

Aufgabe des erfindungsgemäßen Verfahrens ist es daher, die schüttfähigen Feststoffe in einen Zustand zu überführen, bei dem die toxischen Kohlenwasserstoffe vollständig entfernt bzw. zerstört werden und die Schwermetallverbindungen unschädlich oder wiederverwertbar gemacht werden.

Eine Lösung dieser Aufgabe wird durch das erfindungsgemäße Verfahren nach Anspruch 1 erreicht. Die Plasmabrenner können dabei für Gleichstrom-oder Wechselstrombetrieb eingerichtet sein. Das Verfahren kann in reduzierender oder neutraler oder oxidierender Atmosphäre durchgeführt werden.

Besonders vorteilhaft wird das Verfahren für Filter-und Flugaschen aus Abfallverbrennungs-und -verwertungsanlagen, Kabelverschwelanlagen, Aluminiumschmelzwerken und ähnlichen eingesetzt. Auch für die Beseitigung von Stäuben aus der Metallverarbeitung ist dieses Verfahren besonders geeignet. Das Material benötigt keine weitere Vorbehandlung.

Die Schmelze kann kontinuierlich oder taktweise abgezogen werden und z.B. durch Einbringen in Wasser granuliert oder durch das Abgießen in Formen verfestigt werden.

Die bei der Erhitzung entstehenden kondensierbaren Anteile der gasförmigen Reaktions-und Verdampfungsprodukte werden entsprechend ihren durch das System bestimmten Kondensationstemperaturen vorteilhafterweise über eine Kühlstrecke bevorzugt bei 30 bis 450 °C niedergeschlagen und daraus mechanisch abgeführt. Die nichtkondensierbaren Anteile werden einer Gasbehandlung zugeführt.

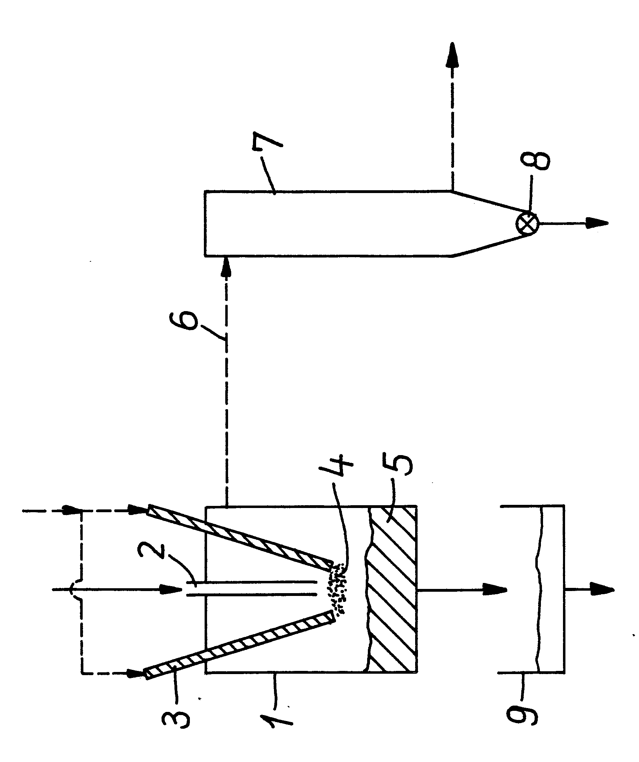

In der Zeichnung wird ein Ausführungsbeispiel des erfindungsgemäßen Verfahrens schematisch dargestellt.

Im Schmelzbehälter 1, der gasdicht abgeschlossen ist, befinden sich oberhalb der Schmelze 5 Plasmabrenner 3,denen das Schüttgut über die Beschickungsvorrichtung 2 zugeführt wird. Hauptsächlich durch die Temperaturen von über 2000 °C im Plasmabogen 4 werden die toxischen Kohlenwasserstoffe völlig zerstört. Nach dem Durchgang des Schüttgutes durch den Plasmabogen fällt das aufgeschmolzene Produkt unter Schwerkrafteinfluß in die Schmelze, die Temperaturen im Bereich von 1000 bis 1600 °C aufweist.Der Abstich der Schmelze und die Erzeugung eines Schmelzgranulats erfolgt im Granulator 9 in an sich bekannter Weise in einem Takt, der im wesentlichen von der Brennerleistung, der Schüttgutrate und der notwendigen Verweildauer bestimmt wird. Beim Erhitzen und Aufschmelzen des Schüttguts entweicht ein Anteil als gasförmiges Stoffgemisch, das zusammen mit dem für die Plasmaausbildung notwendigen Edelgas aus dem geschlossenen Schmelzgefäß abgesaugt und über eine Kühlstrecke 7 geführt wird. Hier werden die kondensierbaren Anteile bei 30 bis 450 °C niedergeschlagen und daraus über das Ventil 8 abgeführt und die nichtkondensierbaren Anteile werden einer geeigneten Gasbehandlung zugeleitet.

Entsprechend dem schematisch dargestellten Verfahren ist Filterasche in drei Verfahrensvarianten behandelt worden. Der Dioxingehalt des Granulats war kleiner als 0,002 µg/kg und lag damit unter der Nachweisgrenze des ausgewählten Meßverfahrens. Die wesentlichen Analysenwerte der Filterasche und der erzeugten Schlacke sind in Tabelle 1 zusammengestellt. Die erzeugte Schlacke ist in den drei Verfahrensvarianten aus einem Schmelzbad von 1300 °C, 1400 °C und 1500 °C gewonnen worden. Bei der Filterasche hat der Nickelgehalt unter der Nachweisgrenze des dort gewählten Meßverfahrens gelegen. Der Cadmiumgehalt der erzeugten Schlacke hat ebenfalls unter der Nachweisgrenze des gewählten Meßverfahrens gelegen. Die erzeugte Schlacke ist nach DIN 38414 eluiert worden. Die Werte für die gelaugte Schlacke und das Eluat sind ebenfalls in Tabelle 1 aufgenommen. Damit ist nachgewiesen, daß die erzeugte Schlacke unproblematisch ist.

Bei diesem Ausführungsbeispiel sind 3 t/h Filterasche zugeführt und 2,4 t/h Granulat gewonnen worden. Außerdem ist 0,3 t/h Kondensat abgezogen worden. Die mittlere Verweildauer im Prozeß hat bei allen drei Verfahrensvarianten 30 Minuten betragen. Bei einer Schmelztemperatur von 1400 °C hat die elektrische Leistungsaufnahme ungefähr 3 MW, der Argonbedarf je Brenner ungefähr 7 m³/h und der Kühlwasserbedarf für den Brenner ca. 8 m³/h betragen. Für die beiden anderen Verfahrensvarianten (1300 °C, 1500 °C) ist der Leistungsbedarf entsprechend etwas niedriger bzw. etwas höher.

## Ansprüche

1. Verfahren zur thermischen Aufarbeitung von schüttfähigen Feststoffen mit Schwermetallverbindungen und/oder toxischen Kohlenwasserstoffverbindungen,
**dadurch gekennzeichnet,** daß die Feststoffe in einem geschlossenen Raum im Lichtbogen von Plasmabrennern geschmolzen werden, schmelzflüssig in das Bad gelangen und die Schmelze abgezogen wird, und daß die gasförmigen Reaktions- und Verdampfungsprodukte aus dem Raum abgezogen, ihre kondensierbaren Anteile in einer Kühlstrecke niedergeschlagen und ihre nicht kondensierbaren Anteile einer geeigneten Gasbehandlung zugeführt werden.

2. Verfahren nach Anspruch 1, dadurch gekennzeichnet, daß die schüttfähigen Feststoffe Filter- und Flugaschen sind.

3. Verfahren nach Anspruch 1, dadurch gekennzeichnet, daß die schüttfähigen Feststoffe Stäube aus der Metallverarbeitung sind.

4. Verfahren nach den Ansprüchen 1 bis 3, dadurch gekennzeichnet, daß die kondensierbaren Anteile entsprechend ihren durch das System bestimmten Kondensationstemperaturen in einer Kühlstrecke niedergeschlagen und daraus mechanisch abgeführt werden.

5. Verfahren nach Anspruch 4, dadurch gekennzeichnet, daß die kondensierbaren Anteile bei 30 bis 450 °C in einer Kühlstrecke niedergeschlagen und daraus mechanisch abgeführt werden.

6. Verfahren nach den Ansprüchen 1 bis 3, dadurch gekennzeichnet, daß die Schmelze kontinuierlich aus dem geschlossenen Raum abgezogen wird.

7. Verfahren nach den Ansprüchen 1 bis 3, dadurch gekennzeichnet, daß die Schmelze durch Einbringen in Wasser granuliert wird.

8. Verfahren nach den Ansprüchen 1 bis 3, dadurch gekennzeichnet, daß die Schmelze in Formen gegossen wird.

9. Vorrichtung zum Schmelzen der schüttfähigen Feststoffe nach den Verfahrensansprüchen 1 bis 6, bestehend aus einem gasdicht abgeschlossenen Behälter (1) mit einer Öffnung für eine Beschickungsvorrichtung (2), einer Gasleitung (6) mit einer Kühlstrecke (7), dadurch gekennzeichnet, daß der Behälter mit Plasmabrennern (3) zur Erzeugung von Lichtbögen ausgerüstet ist.

Europäisches
Patentamt

**EUROPÄISCHER RECHERCHENBERICHT**

Nummer der Anmeldung

EP 88 10 7307

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 779 182 (S.L. CAMACHO) * Insgesamt * | 1-9 | C 22 B 7/00 |
| X | WO-A-8 200 509 (L. BJÖRKLUND) * Ansprüche * | 1,4-5,9 | C 22 B 9/22 C 10 B 53/00 A 62 D 3/00 |
| X | GB-A-2 152 949 (PYROLYSIS SYSTEMS INC.) * Ansprüche * | 1-5 | |
| X | GB-A-2 113 815 (SKF STEEL ENGINEERING AB) * Ansprüche * | 1-5,9 | |
| P,X | EP-A-0 261 477 (BBC BROWN BOVERI AG) * Ansprüche * | 1 | |
| P,X | EP-A-0 234 087 (B.H. JONES) * Ansprüche * | 1 | |
| P,X | CHEMICAL ABSTRACTS, Band 108, 1988, Seite 361, Zusammenfassung Nr. 43427k, Columbus, Ohio, US; & DD-A-245 941 (AKADEMIE DER WISSENSCHAFTEN DER DDR, ZENTRALINSTITUT FUER PHYSIKALISCHE CHEMIE) 20-05-1987 * Insgesamt * | 1 | RECHERCHIERTE SACHGEBIETE (Int. Cl.4) C 22 B C 10 B A 62 D |
| A | GB-A-2 077 768 (SKF STEEL ENGINEERING AB) | | |
| A | DE-A-2 621 393 (MESSERSCHMITT-BÖLKOW-BLOHM GmbH) | | |

Der vorliegende Recherchenbericht wurde für alle Patentansprüche erstellt

| Recherchenort | Abschlußdatum der Recherche | Prüfer |
|---|---|---|
| DEN HAAG | 31-08-1988 | JACOBS J.J.E.G. |